# EUROPÄISCHE PATENTSCHRIFT

(11) **EP 3 288 217 B1**
(45) Veröffentlichungstag und Bekanntmachung des Hinweises auf die Patenterteilung: **08.04.2020**
(21) Anmeldenummer: 16185456.7
(22) Anmeldetag: 24.08.2016
(51) Int. Cl.: H04L 12/26, H04L 12/24, H04W 24/06

(54) **NICHT INTRUSIVE ÜBERWACHUNG EINER VERBINDUNG**
NON-INTRUSIVE LINK MONITORING
NON-INTRUSIVE SURVEILLANCE DE UNE CONNEXION

(43) Veröffentlichungstag der Anmeldung: 28.02.2018
(73) Patentinhaber: Deutsche Telekom AG, 53113 Bonn (DE)
(72) Erfinder: Fock, Gunnar, 53227 Bonn (DE); Sieredzki, Thomas, 53227 Bonn (DE)
(74) Vertreter: Braun-Dullaeus Pannen Emmerling Patent- & Rechtsanwaltspartnerschaft mbB

(56) Entgegenhaltungen:
- US-A1- 2005 058 083
- US-A1- 2012 224 495
- US-A1- 2014 092 736

## Beschreibung

Die Erfindung betrifft ein Verfahren und ein System zur Überwachung der Auslastung einer ersten zu überwachende Verbindung in einem Datenleitungsnetz, das insbesondere ein Mobilfunknetz umfasst.

Bekanntermaßen haben Netzwerkbetreiber das Bedürfnis, die Einhaltung von SLAs ("service level agreements"), die sie mit ihren Kunden geschlossen haben, zu überwachen respektive für einen späteren Nachweis zu dokumentieren. In solchen SLAs werden den Kunden bestimmte Datenraten für deren Datenverkehr zugesichert, die nicht unbedingt konstant sein müssen. Das ist insbesondere dann der Fall, wenn der Netzwerkbetreiber die Bereitstellung von Datenraten oberhalb bestimmter Schwellwerte zugesichert hat und wenn diese Datenraten seitens des Kunden angefordert werden. Beispielsweise ist es möglich, dass einem Kunden für 50% seines Datenverkehrs eine Datenrate mit einem Schwellwert von 10 Mbit/s und für weitere 50% des Datenverkehrs ein Schwellwert von 20 Mbit/s zugesichert ist. Wenn diese Datenraten wegen einer besonders hohen Netzauslastung ausnahmsweise nicht zur Verfügung gestellt werden könnten, hätte der Kunde aus dem Vertrag Ansprüche gegen den Netzbetreiber. Um diesen Ansprüchen entgegen zu treten, ist es für den Netzbetreiber zweckmäßig, die Auslastung der dem Kunden zur Verfügung gestellten ersten Verbindung, die im Verhältnis zu der zugesicherten Datenrate steht, zu kontrollieren.

Dabei stellen bislang bekannte Systeme keine Parameter, insbesondere nicht die erreichbare Datenrate, unmittelbar zur Aufzeichnung zur Verfügung. Möglich ist zwar das testweise Auslasten des Systems bis an die Belastungsgrenze, das sich jedoch während des normalen Betriebs verbietet, weil dadurch nicht nur die einzelne Verbindung sondern das gesamte System negativ beeinflusst wird. Im schlimmsten Fall tragen solche Belastungstests dazu bei, dass vertraglich vereinbarte Werte in weiteren Teilen des Gesamtsystems nicht eingehalten werden können. Derzeit gibt es zwei Herangehensweisen, um die aktuelle Verfügbarkeit respektive die Auslastung zu überwachen:
So kann zum einen die aktuell genutzte Datenrate auf der ersten Verbindung am Zielpunkt unmittelbar gemessen werden. Liegt diese oberhalb des vereinbarten Schwellwertes, gilt das SLA als erfüllt. Liegt die Datenrate jedoch unterhalb des Schwellwertes, ist nicht klar, ob vom Kunden aktuell zu wenig Datenrate angefordert wird oder ob das System nicht in der Lage ist, eine gewünschte höhere Datenrate bereitzustellen. Mit dieser Vorgehensweise kann also nicht unterschieden werden, ob der Kunde eine Datenrate anfordert, die unterhalb des vereinbarten Schwellwertes liegt und das System diese Datenrate bereit stellt, oder ob das System aktuell nur eine geringere Datenrate bereitstellen kann, die unterhalb des Schwellwertes liegt, der Kunde jedoch Bedarf für eine höhere Datenrate hätte. Für die Überwachung des SLAs ist diese Vorgehensweise also nicht ausreichend.

Zum anderen kann - wie oben schon angesprochen - in Perioden niedriger Belastung zusätzliche Last im Rahmen von Belastungstests bis zur Belastungsgrenze in das System eingebracht werden, um die erreichbare Datenrate zu bewerten. Da jedoch die aktuell verfügbare Datenrate unbekannt ist, wird das System bis zur Vollauslastung mit künstlich erzeugter Zusatzlast beaufschlagt, was dazu führt, dass ein Teil der eigentlichen Nutzdaten nicht verarbeitet werden kann. Darüber hinaus führt diese künstlich generierte Last zu Auswirkungen in anderen Bereichen des Gesamtsystems, so dass vereinbarte SLAs in anderen Bereichen des Gesamtsystems nicht mehr eingehalten werden können.

Alle bekannten Verfahren basieren auf einem direkten Eingriff in das System und auf Messungen systeminterner Parameter, wobei als solche beispielsweise Paketverluste bei Überlast oder Zwei-Wege Laufzeiten ermittelt werden können. Es sind auch Messungen mit speziellen Paketen verschiedener Größe bekannt, die es erlauben, Teilsysteme zu vermessen ("Variable Packet Size Probing"). Andere Methoden basieren auf absoluten Ein-Wege Laufzeitmessungen oder auf der Messung relativer Laufzeiten zwischen Paketen im Nutzdatenstrom. Auf jeden Fall gehen alle bekannten Verfahren davon aus, dass die Nutzdatenübertragung und die Überwachung der Überlastsituation in derselben logischen Verbindung stattfindet.

Bei Verfahren mit direktem Eingriff in das bestehende Systeme und bei der Messung von systeminternen Parametern muss das System mitunter modifiziert werden, da es die Ausnahme ist, dass ein System die aktuell für eine logische Verbindung maximal verfügbare Datenrate ermittelt und nach außen berichtet kann. Bei Systemen mit mehreren Teilsystemen müssen diese jeweils unterschiedliche Zusammensetzungen von logischen Verbindungen unterstützen. Schließlich hängt die erreichbare Datenrate auf einer logischen Verbindung meist nicht nur von externen Systemparametern sondern auch von der Datenmenge ab, die auf den anderen logischen Verbindungen übertragen wird.

Die Methoden, die auf der Messung von Paketverlusten bei Überlast basieren, sind denen des konventionellem TCP ähnlich. Sie gehen von der Annahme aus, dass keine Paketverluste auftreten, solange die Verbindung unterhalb der Auslastungsgrenze betrieben wird. Bei Systemen, die inhärent mit Paketverlusten arbeiten, ist diese Annahme jedoch nur unzureichend erfüllt. Auch führt die Nutzung von TCP auf der eigentlichen Datenverbindung dazu, dass die Regelmechanismen die Paketverluste gering halten, indem sie die Datenrate implizit reduzieren. Das macht wiederum eine Unterscheidung von dem Fall der geringeren Nachfrage nach Datenrate schwierig.

Auch die Methoden, die auf der Messung von Zwei-Wege Laufzeiten basieren, sind Teil der (optionalen) TCP Mechanismen zur Regulierung von Datenmengen. Dazu ist eine Modifikation der Header der Nutzdaten erforderlich. Allerdings beeinflussen schwankende Laufzeiten die Resultate. Im Übrigen ist bei allen Laufzeit basierten Verfahren die Überwachung bestimmter Datenraten-Schwellwerte schwierig, da der Zusammenhang zwischen der relativen Systemauslastung und der Änderungen der Laufzeiten indirekt und nur bedingt quantitativ zu ermitteln ist.

Das oben genannte "variable packet size probing" ist ungenau und erfordert das Einfügen spezieller Datenpakete von einer nicht zu vernachlässigenden Größe, die damit eine signifikante Zusatzlast verursachen.

Neben der Notwendigkeit genauer Zeitreferenzen an den Endpunkten setzten Methoden basierend auf Ein-Wege Laufzeitmessungen voraus, dass Queues die Quellen von Verzögerungen und Verzögerungsänderungen im Gesamtsystem bilden. Das kann jedoch nur in wenigen Systemen vorausgesetzt werden. So kommt es gerade in Mobilfunksystemen zur Nutzung von Verbindungen mit deutlich unterschiedlichen Laufzeiten, zwischen denen auch während der Lebensdauer einer Verbindung gewechselt wird. Zudem muss in die Verbindung mit den Nutzdaten eingegriffen werden, um Markierungen zur Ermittlung der Laufzeiten einzubringen. Letztendlich erfordern auch Methoden basierend auf der Messung relativer Laufzeiten das Einfügen von Pakten in den Nutzdatenstrom. Da solche Verfahren sensibel auf Änderungen im Nutzdatendurchsatz auch unterhalb der Auslastungsgrenze reagieren, sind sie für die hier zur Debatte stehenden Zwecke nicht geeignet.

US2012/0224495 A1 offenbart ein Verfahren zur Überwachung der Leistungen auf einer ersten Verbindung in einem Datenleitungsnetz, wobei es überprüft wird, ob ein zwischen Betreiber und Kunden vereinbartes "Service Level Agreement" eingehalten wird. Zu diesem Zweck werden Testdaten mit einem eigenen Format von einem ersten Endgerät erzeugt und über die selbe Verbindung wie die Nutzdaten gesendet. Ein zweites Endgerät empfängt die Testdaten und schickt diese zurück zum ersten Endgerät, wo sie analysiert werden. Den Testdaten wird eine niedrigere Priorität zugeordnet.

Aufgabe der Erfindung ist es nunmehr, ein mit einfachen Mitteln umzusetzendes Verfahren und System zur Überwachung der Auslastung der ersten zu untersuchenden Verbindung zu schaffen, das ohne störende Eingriffe in das laufende System auskommt und das genaue Resultate liefert.

Diese Aufgabe wird durch das Verfahren nach Anspruch 1 und das System nach Anspruch 12 gelöst. Bevorzugte Ausgestaltungen ergeben sich aus den Unteransprüchen.

Der Kern der Erfindung liegt anspruchsgemäß zunächst darin, dass neben der zu überwachenden ersten logischen Verbindung eine zweite unabhängige logische Verbindung aufgebaut wird, der jedoch eine im Verhältnis zur ersten Verbindung geringere Priorität zugeordnet ist. Das bedeutet, dass Datenpakete, die über die erste Verbindung geschickt werden sollen, den Vorrang vor Paketen auf der zweiten Verbindung haben. Zudem ist die zweite Verbindung derart, dass sie mit der ersten Verbindung um die Datenrate im Datenleitungsnetz konkurriert. Wenn also die gesamte im Datenleitungsnetz zur Verfügung stehende Datenrate von der ersten Verbindung verbraucht wird, bleibt keine Datenrate für die zweite Verbindung übrig, so dass darüber gesendete Daten nicht am Zielpunkt ankommen.

In dieser Konstellation werden dann erfindungsgemäß Testdaten in Form kleiner Datenpakete mit geringem Datenvolumen über die zweite Verbindung versendet. Der Empfang dieser Testdaten am Zielpunkt wird detektiert. Wenn nun die kleine Menge an Testdaten trotz der geringeren Priorität zumindest nahezu vollständig durch das Datenleitungsnetz gelangen kann, signalisiert das, dass die Auslastung der ersten Verbindung noch nicht vollständig war, dass mithin noch mehr Daten in der ersten Verbindung hätten übertragen werden können. Wenn hingegen keine Testdaten ankommen, zeigt das, dass die diesbezügliche Kapazität des Netzes durch die erste Verbindung vollständig belegt ist. Je nach Implementierung werden die nicht übermittelten Datenpakete zwischenspeichert und später ausgeliefert oder komplett verworfen.

Somit signalisiert ein detektierter Empfang der Testdaten am Zielpunkt die noch nicht vollständige Auslastung des Systems zum Zeitpunkt der Messung. Wenn durch den Netzbetreiber über die Gesamtdauer der ersten Verbindung der Empfang der Testdaten nachgewiesen werden kann, dann hat der Kunde keinen Grund, die Erfüllung das SLA in Frage zu stellen.

Dabei seien im Zusammenhang mit der Erfindung mit "kleinen Datenpaketen mit geringem Datenvolumen" Pakete solcher Größe gemeint, deren Datenvolumen die zur Verfügung stehende Kapazität des Netzwerkes nicht merklich belastet. Dabei hat es sich als vorteilhaft erwiesen, wenn die Testdaten in Paketen mit einer Datenrate zwischen 10 Byte und höchstens 100 Kbyte pro Sekunde versendet werden. Letztendlich gilt, je kleiner die Datenpakete sind, desto sensibler kann die Auslastung der ersten Verbindung ausgemessen werden.

Außerdem sei an dieser Stelle angemerkt, dass die zu überwachende erste logische Verbindung Teil einer komplexen Gesamtverbindung aus mehreren einzelnen logischen Teilverbindungen sein kann, für die insbesondere der Netzbetreiber verantwortlich ist. Mit der erfindungsgemäßen Messung an einer Gesamtverbindung wird dann die Kapazität des "bottlenecks" der Gesamtverbindung bestimmt.

Wie oben dargelegt, signalisiert ein Empfang der Testdaten eine noch nicht vollständige Auslastung der ersten Verbindung. Allerdings bedeutet kein Empfang von Testdaten am Zielpunkt nicht unbedingt, dass eine im SLA zugesicherte Datenrate nicht zur Verfügung stand, da der Kunde in dem Moment der Messung gerade eine im Verhältnis zur zugesicherten eine überhöhte Datenrate genutzt haben könnte. Auch dann wären keine Testdaten über die zweite Verbindung übertragen worden. Der Kunde hätte aber auch keinen Grund, das SLA in Frage zu stellen. Dennoch ist es besonders vorteilhaft, wenn der Netzbetreiber zusätzlich zum Empfang der Testdaten auch noch den Datendurchsatz der Nutzdaten über die zu überwachende erste Verbindung am Zielpunkt während des Bestehens möglichst kontinuierlich ermittelt. Die so ermittelte Datenrate der Nutzdaten kann er dann in das Verhältnis zu einer vorbestimmten, insbesondere zu einer vertraglich zugesicherten, Datenrate setzen und feststellen, ob die im SLA zugesicherte Datenrate übertroffen wurde. Mit der kombinierten Messung des Empfangs der Testdaten und der Nutzdaten kann der Netzbetreiber jeglichen Nachweis der Einhaltung seiner Verpflichtungen erfüllen.

Mit dieser kombinierten Vorgehensweise ist es somit möglich, Messwerte zu generieren, die eine Auswertung dahingehend erlauben, ob die in dem SLA zugesicherte Datenrate erreicht wird oder nicht. Wie beschrieben wird dazu vorteilhafterweise die aktuell erreichte Datenrate ermittelt und zudem überprüft, ob diese Datenrate durch die aktuell geringe Anforderung von Kundenseite oder durch die momentane Systemkapazität limitiert ist. Nur für den Fall dass die Limitierung durch die Systemkapazität bedingt ist, wird dies als Nichterfüllung des SLAs gewertet.

Im Vergleich zu den bisher bekannten Verfahren erlaubt die erfindungsgemäße Vorgehensweise, die Einhaltung des SLAs bezüglich der Datenrate kontinuierlich und vollständig zu überwachen, ohne das System auf unzulässige Weise zu belasten. Das erfindungsgemäße Verfahren bedingt dabei lediglich eine geringe Wechselwirkung mit den zu überwachenden Nutzdatenströmen, da es auf der Nutzung der unabhängigen logischen zweiten Verbindung basiert. Zudem zeichnet sich die erfindungsgemäße Vorgehensweise durch eine hohe Sensitivität bei dem gleichzeitig geringen Einfluss auf die zu überwachenden Parameter aus. Auch ist das Verfahren technisch verhältnismäßig einfach zu realisieren.

Durch den Einsatz der zusätzlichen logischen Verbindung mit niedrigerer Priorität kommt es zu einem weit besser messbaren Effekt bei Überlastung des Systems, als bei Systemen, bei denen die Messungen in derselben logischen Verbindung durchgeführt werden, die auch die zu überwachenden Nutzdaten trägt. Die hier beschriebene Methode ist zudem robust gegen sich ändernde systembedingte Laufzeiten während des Messvorganges.

Das Ermitteln des aktuellen Zustands der ersten Verbindung und damit des zu überwachenden Systems/Teilsystems am Zielpunkt der Pakete oder an einem Zwischenpunkt kann über die aktuell am Zielpunkt/Zwischenpunkt ankommende Datenrate der Nutzdaten bestimmt werden. Der aktuelle Auslastungszustand der ersten Verbindung kann aber auch durch die Messung eines Parameter ermittelt werden.

Für die Dokumentation ist es besonders vorteilhaft, wenn die Testdaten in definierter zeitlicher Abfolge versendet werden und der entsprechende Empfang der Testdaten zu Protokollzwecken aufgezeichnet wird. Je mehr Datenpaketchen pro Zeiteinheit versendet werden, desto höher ist die zeitliche Auflösung der Messung. Insbesondere ist es vorteilhaft, wenn die Testdaten während des Bestehens der ersten Verbindung kontinuierlich versendet werden.

Weiterhin ist es vorteilhaft, wenn beim Empfang der Testdaten ein bestimmter Parameter ermittelt wird, der Rückschlüsse auf das Erreichen der Auslastung der ersten Verbindung, mithin das Erreichen deren Kapazitätsgrenze erlaubt. Dieser Parameter kann ein Paketverlust, eine im Verhältnis zu einem Schwellwert erhöhte Paketlaufzeit, eine Änderung der Paketlaufzeit, oder eine Auswertung einer Paketlaufzeitdifferenz sein. Darüber hinaus sind auch andere Methoden vorstellbar, die geeignet sind, die Auslastung einer einzelnen logischen Verbindung zu detektieren.

In einer besonderen Ausführungsform werden die Pakete der Testdaten mit Markierungen versehen, wobei als Markierungen insbesondere Sequenznummern und/oder Zeitstempel verwendet werden.

Auch im Strom der Nutzdaten können Datenpakete mit Sequenznummern und/oder Zeitstempeln markiert werden, um eine potentiell auftretende lastunabhängige Verzögerung der Datenpakte auf den logischen Verbindungen kompensieren zu können. Zudem kann eine Auswertung der markierten Datenpakete im Nutzdatenstrom zum Zwecke der Kompensation von lastunabhängigen Verzögerungen erfolgen. In diesem Fall werden die Nutzdaten manipuliert.

Um die Manipulation der Nutzdaten zu vermeiden, kann es sinnvoll sein, über die erste Verbindung zusätzliche Kalibrierungsdaten mit einem geringem Datenvolumen zu versenden, die nur von kleinen mit Sequenznummern und/oder Zeitstempeln markierten Datenpaketen gebildet werden, wobei es im Prinzip ausreicht, Sequenznummern und/oder Zeitstempel allein als Kalibrierungsdaten zu versenden. Diese Kalibrierungsdaten können dann auf die genannte Weise zur Kalibrierung der über die zweite Verbindung empfangenen Testdaten genutzt werden.

Für die Priorisierung einer Verbindungen werden vorteilhafterweise die von dem jeweiligen Standard der Verbindung vorgegebenen Klassen, wie beispielsweise QCI Klassen, verwendet. Damit wird der zweiten Verbindung eine Klasse niedrigerer Priorität als der ersten Verbindung zugeordnet. Falls der ersten Verbindung schon die Klasse mit niedrigster Priorität zugeordnet ist, ist es vorteilhaft, diese anzuheben, um die Klasse mit niedrigster Priorität für die zweite Verbindung frei zu machen.

In einer weiteren Ausführungsform kann der Systemzustand über mehrere Überwachungsintervalle aggregiert und für eine weitere Nachverarbeitung zur Verfügung gestellt werden.

Insgesamt ist es für die Dokumentation von Vorteil, wenn die Ergebnisse gespeichert und/oder übermittelt werden. Dabei kann Übermittelung der Ergebnisse alternativ über das zu vermessende System oder über andere Wege erfolgen.

Entsprechend der Erfindung werden somit Messwerte bereitgestellt, anhand derer bewertet werden kann, ob ein SLA bezüglich der erreichbaren Datenrate erfüllt wird oder nicht. Dazu wird einerseits die aktuell erreichte Datenrate ermittelt und andererseits überprüft, ob diese Datenrate durch die aktuell geringe Anforderung von Kundenseite oder durch die momentane Systemkapazität limitiert ist. In dem Fall, dass die Limitierung durch die Systemkapazität bedingt ist, wird dies als Nichterfüllung des SLAs gewertet. In dieser Erfindung werden die beiden Teilaspekte der Messung auf verschiedenen logischen Verbindungen realisiert. Erfindungsgemäße hat die zweite logische Verbindung eine niedrige Priorität als die zu überwachenden erste logische Verbindung, konkurriert aber um dieselben Ressourcen, wie die eigentlich zu überwachende erste logische Verbindung.

Die erfindungsgemäße Vorgehensweise ist bei allen Systemen anwendbar, die den Einsatz von logischen Verbindungen mit unterschiedlichen Prioritäten erlauben und diese Prioritäten bei der Ressourcenzuteilung strikt berücksichtigen. Dies ist beispielsweise bei zellularen Mobilfunksystemen mit QoS handling (QCI), im IP Umfeld (802.1p, 802.1q, TOS, DSCP) und - mit Einschränkungen - auch bei WLAN (802.11e) gegeben.

Die Erfindung wird nachfolgend anhand der Figuren näher beschrieben. Es zeigen:
- **Figur 1**: eine Messung auf der zweiten Verbindung und
- **Figur 2**: eine Messung auf der zweiten Verbindung.

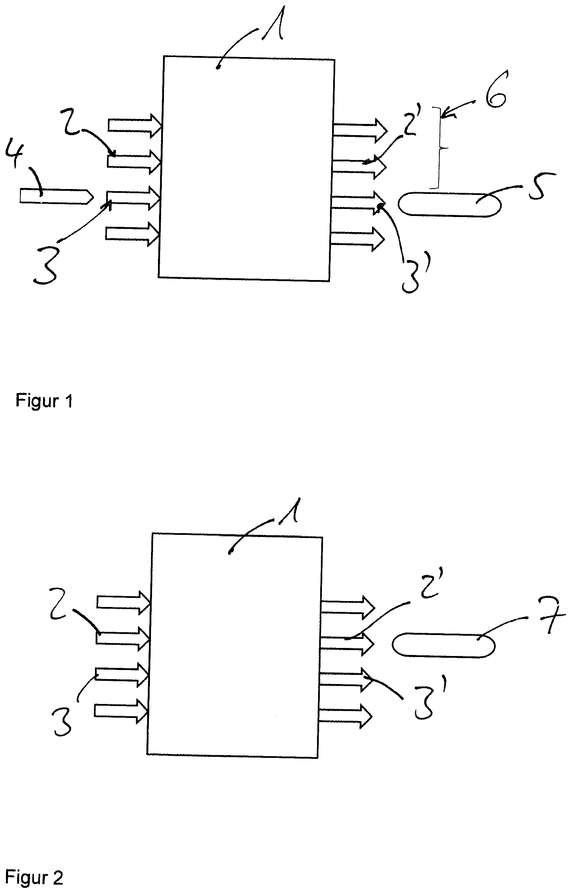

Figur 1 zeigt ein Datenleitungsnetz 1, das lediglich als "black box" dargestellt ist und verschiedene logische Verbindungen unterschiedlicher Priorisierungen realisieren kann. Im vorliegenden Fall sind vier Verbindungen mit eingehenden und ausgehenden Pfeilen dargestellt. Dabei ist die erste Verbindung mit einer Priorität von N durch den eingehenden Pfeil 2 und eine zweite Verbindung mit einer Priorität von N-1 durch den eingehenden Pfeil 3 dargstellt. Die jeweils ausgehenden Pfeile 2' und 3' symbolisieren die jeweils andere Seite der Verbindung. In die zweite Verbindung 3 werden Testdaten 4 versendet und der Empfang der Testdaten am Ende 5 der Verbindung 2 detektiert. Die Versendung der Testdaten hat keinen Einfluss auf die Verbindungen mit höherer Priorität, die durch die Klammer 6 dargestellt sind. Die Auslastung der ersten Verbindung 2 wird wie beschrieben über den Empfang respektive den ausbleibenden Empfang der Testdaten ermittelt.

In Figur 2 ist dasselbe System gezeigt, wobei das Monitoring der Testdaten aus Gründen der Übersichtlichkeit nicht dargestellt ist. In diesem Fall wird lediglich der Datendurchsatz der zu überwachenden ersten Verbindung 2 am Zielpunkt 7 ermittelt und ins Verhältnis zu einer vorbestimmten, insbesondere zu einer vertraglich zugesicherten, Datenrate gesetzt.

Die Kombination beider Verfahren führt zu einem zuverlässigen Nachweis darüber, inwieweit ein SLA bezüglich der erreichbaren Datenrate erfüllt wird.

## Patentansprüche

1. Verfahren zur Überwachung der Auslastung einer ersten Verbindung in einem Datenleitungsnetz, insbesondere in einem Mobilfunknetz,
**dadurch gekennzeichnet,**
**dass** eine unabhängige logische zweite Verbindung aufgebaut wird, der eine geringere Priorität als der ersten Verbindung zugeordnet ist und die mit der ersten Verbindung um die Datenrate im Datenleitungsnetz konkurriert, wobei über die zweite Verbindung Testdaten mit geringem Datenvolumen versendet werden, wobei der Empfang der Testdaten detektiert wird und wobei ein vollständiger Empfang der Testdaten eine nicht vollständige Auslastung der ersten Verbindung signalisiert.

2. Verfahren nach Anspruch 1,
wobei der Datendurchsatz der zu überwachenden ersten Verbindung am Zielpunkt ermittelt und ins Verhältnis zu einer vorbestimmten, insbesondere zu einer vertraglich zugesicherten, Datenrategesetzt wird.

3. Verfahren nach Anspruch 1 oder 2,
wobei die Testdaten in definierter zeitlicher Abfolge versendet werden und der entsprechende Empfang der Testdaten zu Protokollzwecken aufgezeichnet wird.

4. Verfahren nach Anspruch 3,
wobei die Testdaten während des Bestehens der ersten Verbindung kontinuierlich versendet werden.

5. Verfahren nach einem der vorherigen Ansprüche,
wobei beim Empfang der Testdaten ein Parameter ermittelt wird, der Rückschlüsse auf das Erreichen der Auslastung der ersten Verbindung erlaubt, wobei der Parameter insbesondere ein Paketverlust, eine erhöhte Paketlaufzeit, eine Änderung der Paketlaufzeit, oder eine Paketlaufzeitdifferenz ist.

6. Verfahren nach einem der vorherigen Ansprüche,
wobei die Pakete der Testdaten mit Markierungen versehen werden, wobei die Markierungen insbesondere Sequenznummern und/oder Zeitstempel sind.

7. Verfahren nach einem der vorherigen Ansprüche,
wobei die Testdaten in Paketen mit einer Datenrate zwischen 10 Byte und 100 Kbyte pro Sekunde versendet werden.

8. Verfahren nach einem der vorherigen Ansprüche,
wobei für die Priorisierung standardisierte Klassen, insbesondere QCI Klassen, verwendet werden, wobei der zweiten Verbindung eine Klasse niedrigerer Priorität als der ersten Verbindung zugeordnet ist.

9. Verfahren nach Anspruch 8,
wobei für die erste Verbindung eine Klasse höhere Priorität verwendet wird, wenn bisher die Klasse mit der niedrigsten Priorität verwendet wird.

10. Verfahren nach einem der vorherigen Ansprüche,
wobei Kalibrierungsdaten mit geringem Datenvolumen auf der ersten Verbindung gesendet werden, die zur Kalibrierung der über die zweite Verbindung empfangenen Testdaten genutzt werden.

11. Verwendung des Verfahrens nach einem der vorherigen Ansprüche zur Kontrolle der Einhaltung von Service Level Agreements, SLA, zwischen einem Netzbetreiber und einem Kunden.

12. System umfassend ein Datenleitungsnetz (1) sowie Mittel zur Durchführung des Verfahrens nach einem der vorherigen Ansprüche.

## Claims

1. A method for monitoring the utilization of a first connection in a data network, particularly in a mobile telephone network, **characterized in that** an independent second logic connection is established which is assigned a lower priority than the first connection and which competes with the first connection for the data rate within the data network, wherein test data with low data volume are sent via the second connection, wherein the reception of the test data is detected, and wherein a complete reception of the test data indicates that the first connection is not fully utilized.

2. The method according to Claim 1, wherein data throughput in the first connection to be monitored is determined at a destination and is considered in relation to a predefined, in particular to a contractually promised, data rate.

3. The method according to Claim 1 or 2, wherein the test data are sent in a defined temporal sequence and the respective reception of the test data is recorded for protocol purposes.

4. The method according to Claim 3, wherein the test data are sent continuously while the first connection is in place.

5. The method according to any one of the preceding claims, wherein a parameter is determined when the test data are received, which parameter makes it possible to conclude whether full utilization of the first connection has been reached, wherein the parameter in particular is a packet loss, an increased packet runtime, a change in the packet runtime, or a difference in packet runtime.

6. The method according to any one of the preceding claims, wherein packets of the test data are provided with markers, wherein the markers in particular are sequence numbers and/or time stamps.

7. The method according to any one of the preceding claims, wherein the test data are sent in packets with a data rate of between 10 bytes and 100 Kbytes per second.

8. The method according to any one of the preceding claims, wherein standardized classes, in particular QCI classes, are used for the prioritization, wherein the second connection is assigned a lower priority class than the first connection.

9. The method according to Claim 8, wherein a higher priority class is used for the first connection if the lowest priority class was previously used.

10. The method according to any one of the preceding claims, wherein calibration data with a low data volume are sent on the first connection, which calibration data are used for calibrating the test data received via the second connection.

11. A use of the method according to any one of the preceding claims for monitoring the fulfillment of service level agreements - SLA - between a network operator and a client.

12. A system comprising a data network (1) and means for executing the method according to any one of the preceding claims.

## Revendications

1. Procédé de surveillance de la charge sur une première connexion dans un réseau de lignes de données, en particulier dans un réseau radio mobile, **caractérisé en ce qu'**une deuxième connexion logique indépendante est établie, à laquelle est affectée une priorité inférieure à la première connexion et qui est connectée en concurrence avec la première connexion par le débit de données dans le réseau de lignes de données, les données de test avec un petit volume de données étant envoyées via la deuxième connexion, la réception des données de test étant détectée et une réception complète des données de test signalant une utilisation incomplète de la première connexion.

2. Procédé selon la revendication 1, dans lequel le débit de données de la première connexion à surveiller est déterminé au point de destination et est établi par rapport à un débit de données prédéterminé, en particulier garanti contractuellement.

3. Procédé selon la revendication 1 ou 2, dans lequel les données de test sont envoyées dans une séquence de temps définie et la réception correspondante des données de test est enregistrée à des fins de protocole.

4. Procédé selon la revendication 3, dans lequel les données de test sont envoyées en continu pendant que la première connexion est établie.

5. Procédé selon l'une quelconque des revendications précédentes, dans lequel un paramètre est déterminé lors de la réception des données de test, ce qui permet de tirer des conclusions quant à l'utilisation de la première connexion, dans lequel le paramètre est en particulier une perte de paquets, une augmentation de la durée d'exécution des paquets, une modification du temps de transit des paquets ou une différence de temps de transit des paquets.

6. Procédé selon une quelconque des revendications précédentes, dans lequel les paquets des données de test sont pourvus de marquages, dans lequel les marquages sont notamment des numéros de séquence et / ou des horodatages.

7. Procédé selon une quelconque des revendications précédentes, dans lequel les données de test sont envoyées en paquets avec un débit entre 10 octets et 100kilo-octets par seconde.

8. Procédé selon une quelconque des revendications précédentes, dans lequel la hiérarchisation des classes normalisées, en particulier des classes QCI, est utilisée, dans lequel la deuxième connexion se voit attribuer une classe de priorité inférieure à la première connexion.

9. Procédé selon la revendication 8, dans lequel une classe de priorité plus élevée est utilisée pour la première connexion si la classe avec la priorité la plus basse a déjà été utilisée.

10. Procédé selon une quelconque des revendications précédentes, dans lequel des données d'étalonnage avec un faible volume de données sont envoyées sur la première connexion, qui sont utilisées pour étalonner les données de test reçues via la deuxième connexion.

11. Utilisation du procédé selon une des revendications précédentes en vue du contrôle de la conformité aux accords de niveau de service, SLA, entre un opérateur de réseau et un client.

12. Système comprenant un réseau de lignes de données (1) et des moyens pour mettre en œuvre le procédé selon l'une des revendications précédentes.
